# FASCICULE DE BREVET EUROPEEN

(11) **EP 1 672 315 B1**
(45) Date de publication et mention de la délivrance du brevet: **26.09.2007**
(21) Numéro de dépôt: 04106712.5
(22) Date de dépôt: 20.12.2004
(51) Int. Cl.: G01C 19/56

(54) **Transducteur de mesure d'une vitesse angulaire**
Wandler zur Winkelgeschwindigkeitsmessung
Transducer for measuring angular velocity

(43) Date de publication de la demande: 21.06.2006
(73) Titulaire: ETA SA Manufacture Horlogère Suisse, 2540 Grenchen (CH)
(72) Inventeur: Dalla Piazza, Silvio, 2610, Saint-Imier (CH); Studer, Bruno, 4533, Riedholz (CH)
(74) Mandataire: Vigand, Philippe

(56) Documents cités:
- EP-A- 1 345 008
- US-A- 6 046 531
- US-A1- 2004 085 163
- US-A1- 2004 250 621

## Description

### DOMAINE TECHNIQUE

La présente invention concerne, de manière générale, un transducteur de mesure d'une vitesse angulaire formé par un unique diapason piézoélectrique destiné à tourner à ladite vitesse angulaire comprenant une base depuis laquelle s'étendent une branche d'excitation et une branche de détection, et concerne plus particulièrement l'agencement des électrodes de détection disposées sur la branche de détection.

### ARRIERE-PLAN TECHNOLOGIQUE

Il connu dans l'art antérieur, notamment du document EP 0 750 177, un gyromètre formé par un unique diapason présentant une base depuis laquelle s'étendent une première branche sur laquelle sont disposées des électrodes d'excitation et une deuxième branche sur laquelle sont disposées des électrodes de détection.

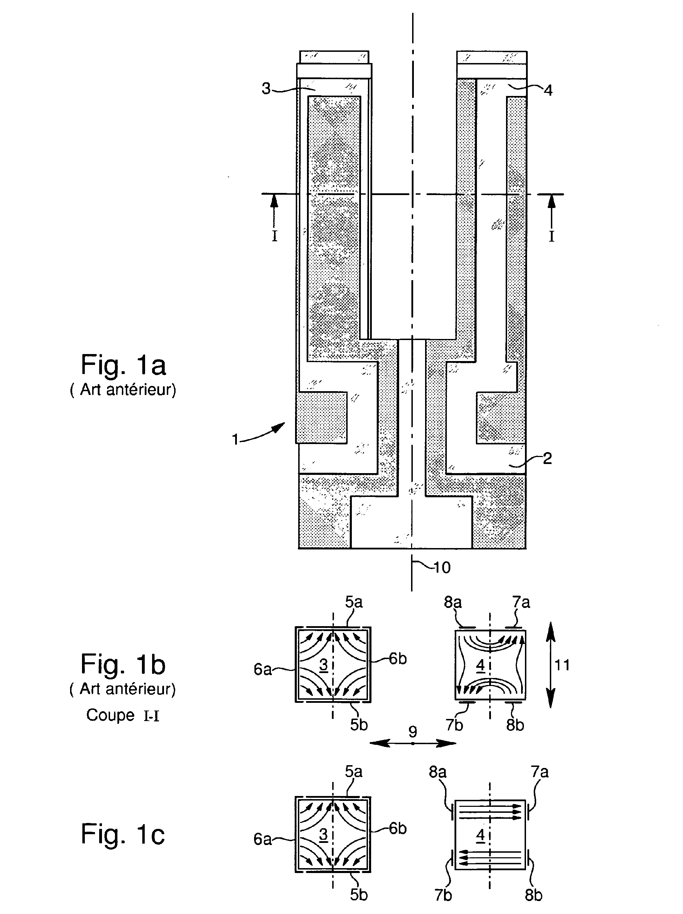

Sur la figure 1 est représenté un exemple de diapason 1 du type de ceux utilisables dans un gyromètre. Le diapason 1 représenté en coupe longitudinale dans la figure 1a comporte principalement une base 2 solidaire de deux branches 3, 4, l'ensemble étant réalisé en un matériau de quartz piézo-électrique. Comme représenté en coupe transversale selon la figure 1 b, chaque branche 3, 4 comporte des électrodes. La branche d'excitation 3 comporte une première paire d'électrodes d'excitation 5a, 5b connectées ensemble et sur lesquelles est appliqué un signal électrique alternatif à la fréquence de résonance du diapason dans son plan principal correspondant à celui de la figure 1a, et une deuxième paire d'électrodes d'excitation 6a, 6b connectées ensemble et sur lesquelles est appliqué un signal électrique alternatif en opposition de phase de celui appliqué sur les électrodes 5a et 5b. L'application de ces signaux électriques alternatifs permet d'exciter et par conséquent de faire vibrer mécaniquement les branches 3, 4 du diapason 1 dans un premier plan, comme indiqué par les flèches 9. La branche de détection 4 comporte une première paire d'électrodes de détection 7a, 7b connectées ensemble et une deuxième paire d'électrodes de détection 8a, 8b connectées ensemble, paires qui permettent de transformer les vibrations mécaniques de la branche de détection en un signal électrique détecté au moyen d'un circuit de détection auxquelles ces électrodes sont reliées.

Selon la théorie des gyromètres à diapason, pendant qu'un signal d'excitation est appliqué sur les électrodes d'excitation 5a-5b, 6a-6b, un mouvement en rotation angulaire du diapason 1 autour de son axe longitudinal 10 génère une force de Coriolis perpendiculaire à la vitesse de la branche excitée et à l'axe de rotation 10, et par conséquent, une vibration dans la branche de détection 4 dans un plan perpendiculaire au plan correspondant à la vibration d'excitation, comme indiqué par les flèches 11. Cette vibration mécanique est transformée par le quartz piézo-électrique du diapason 1 en un signal électrique qui est détecté par les électrodes de détection 7a-7b, 8a-8b du diapason.

L'un des principaux problèmes observé avec une telle disposition d'électrodes de détection, réside dans le fait que le chemin électrique du champ à détecter entre deux électrodes de détection sur lesquelles un signal électrique opposé est appliqué, n'est pas rectiligne, et par conséquent une partie non négligeable des lignes de champ est perdue. De ce fait, la mesure de détection n'est pas optimale.

Une solution théoriquement intéressante consisterait à disposer les deux paires d'électrodes de détection 7a-7b, 8a-8b, tel que cela est représenté à la figure 1c. Toutefois, cette solution présente un inconvénient majeur, dans la mesure où elle nécessite la mise en oeuvre d'un procédé de fabrication complexe et difficilement maîtrisable. En effet, les électrodes présentes sur les faces latérales du diapason sont réalisées par un "dépôt d'électrode", lequel est forcément réalisé sur toute l'épaisseur de la face latérale. Ainsi, il est alors très difficile de pouvoir séparer le dépôt d'électrode en deux, de manière à obtenir les deux électrodes 7b, 8a distinctes souhaitées. De plus, ce genre de gyromètre est réalisé en série, c'est-à-dire les uns à côté des autres. Aussi, il est également très difficile de séparer le dépôt d'électrode effectué sur les faces latérales extérieures du diapason en deux électrodes 7a, 8b distinctes.

De plus, les différentes solutions susmentionnées présentent un inconvénient supplémentaire, à savoir, la taille du diapason, qui pour de telles applications gyromètres embarqués doivent bien entendu être avantageusement le plus miniaturisés possible.

US 6 046 531 décrit un gyromètre formé par un diapason piézoélectrique avec deux branches d'excitation et deux branches de détection. Chaque branche de détection comprend un trou de passage avec deux électrodes de détection.

### RESUME DE L'INVENTION

L'un des buts principaux de la présente invention est de pallier aux inconvénients susmentionnés en réalisant un transducteur de mesure d'une vitesse angulaire sous forme d'un résonateur piézo-électrique à diapason présentant une structure d'électrodes de détection assurant une mesure optimisée du champ électrique créé dans la branche de détection tout en utilisant un procédé de fabrication simple à mettre en oeuvre.

A cet effet, dans le cadre de la présente invention, il est prévu d'agencer les électrodes de détection de manière à ce que, d'une part, leur procédé de fabrication soit simple et que, d'autre part, les lignes de champ électrique détectées dans la branche de détection parcourent un chemin électrique sensiblement rectiligne entre les électrodes opposées au travers de la branche de détection. Dans ce but, au moins une rainure est gravée sur chacune des faces principales, supérieure et inférieure, de la branche de détection du diapason, ce qui a également pour avantage de réduire la taille du diapason pour des performances équivalentes. Ainsi, l'invention concerne un transducteur de mesure d'une vitesse angulaire selon le préambule de la description caractérisé en ce que la branche de détection comprend au moins une première rainure sur la face supérieure et au moins une deuxième rainure sur la face inférieure, les première et deuxième rainures présentant chacune des flancs latéraux, et en ce que les moyens de détection comprennent des première et deuxième électrodes de détection disposées en regard l'une à l'autre, la première électrode de détection étant agencée sur un des flancs latéraux de la première rainure, la deuxième électrode de détection étant agencée de sorte que le champ électrique entre les première et deuxième électrodes de détection soit sensiblement rectiligne au travers de la branche de détection, et des troisième et quatrième électrodes de détection disposées en regard l'une à l'autre, la troisième électrode de détection étant agencée sur un des flancs latéraux de la deuxième rainure, la quatrième électrode de détection étant agencée de sorte que le champ électrique entre les troisième et quatrième électrodes de détection soit sensiblement rectiligne au travers de la branche de détection.

Selon un premier mode préféré de réalisation de la présente invention, le transducteur de mesure est caractérisé en ce que la branche de détection comprend une troisième rainure sur la face supérieure et une quatrième rainure sur la face inférieure, les troisième et quatrième rainure présentant chacune deux flancs latéraux, en ce que la première, respectivement deuxième, électrode de détection est agencée sur un des flancs latéraux de la première, respectivement troisième, rainure de sorte que le champ électrique entre les première et deuxième électrodes de détection soit sensiblement rectiligne entre les première et deuxième électrodes au travers de la branche de détection et en ce que la troisième, respectivement quatrième, électrode de détection est agencée sur un des flancs latéraux de la deuxième, respectivement quatrième, rainure de sorte que le champ électrique soit sensiblement rectiligne entre les troisième et quatrième électrodes de détection au travers de la branche de détection.

Selon un deuxième mode de réalisation de la présente invention, le transducteur de mesure est caractérisé en ce que la deuxième électrode de détection est agencée sur toute l'épaisseur d'une première face latérale de la branche de détection de sorte que le champ électrique entre les première et deuxième électrodes de détection soit sensiblement rectiligne au travers de la branche de détection, et en ce que la quatrième électrode de détection est agencée sur toute l'épaisseur de la deuxième face latérale de la branche de détection opposée à la première face latérale, de sorte que le champ électrique entre les troisième et quatrième électrodes de détection soit sensiblement rectiligne au travers de la branche de détection.

Toujours dans un souci de miniaturisation, il est prévu avantageusement des moyens de découplage mécanique au niveau de la base du diapason, permettant ainsi de réduire encore la taille de celle-ci.

### BREVE DESCRIPTION DES FIGURES

D'autres caractéristiques et avantages de la présente invention apparaîtront plus clairement à la lecture de la description détaillée qui suit de modes de réalisation de l'invention donnés uniquement à titre d'exemple non limitatif et illustrés par les dessins annexés où :
- la figure 1a, déjà décrite, est une vue en coupe longitudinale d'un diapason tel que ceux utilisés dans certains gyromètres selon l'art antérieur ; -
- la figure 1b, déjà décrite, est une vue en coupe transversale I-I des branches d'excitation et de détection du diapason de la figure 1a ;
- la figure 1c, déjà décrite, est une vue en coupe transversale des branches d'excitation et de détection d'un diapason avec une disposition optimisée des électrodes de détection ;
- la figure 2a est une vue en coupe longitudinale d'un diapason pour gyromètre selon un premier mode de réalisation de l'invention ;
- la figure 2b est une vue agrandie en coupe transversale II-II des branches d'excitation et de détection du diapason selon la figure 2a ;
- la figure 2c est une vue agrandie en coupe transversale des deux branches d'un diapason selon une variante du premier mode de réalisation de l'invention ;
- la figure 3 est une vue agrandie en coupe transversale des branches d'excitation et de détection d'un diapason selon un deuxième mode de réalisation selon l'invention.

### DESCRIPTION DETAILLEE DE L'INVENTION

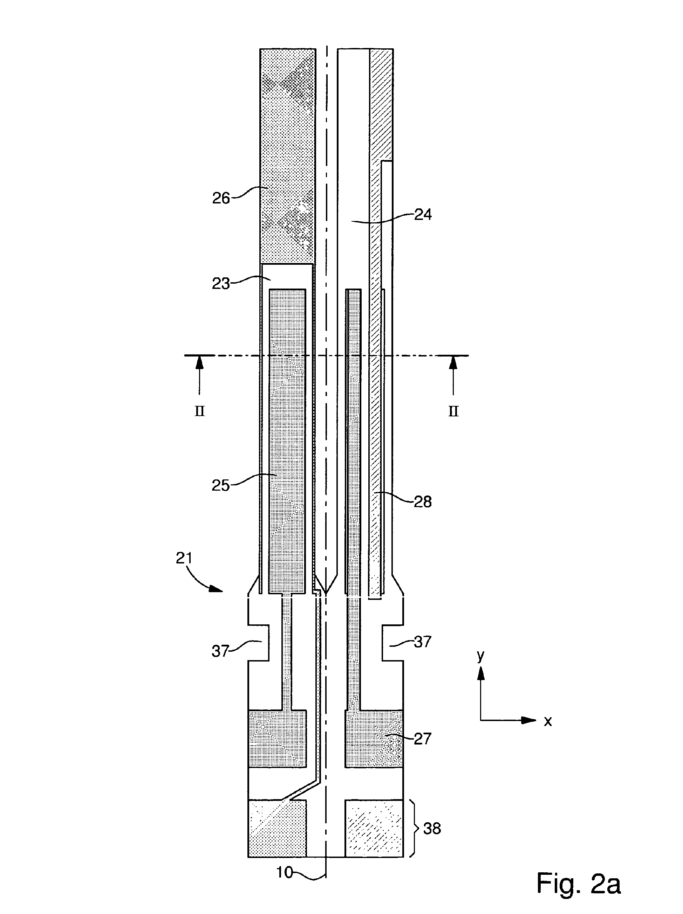

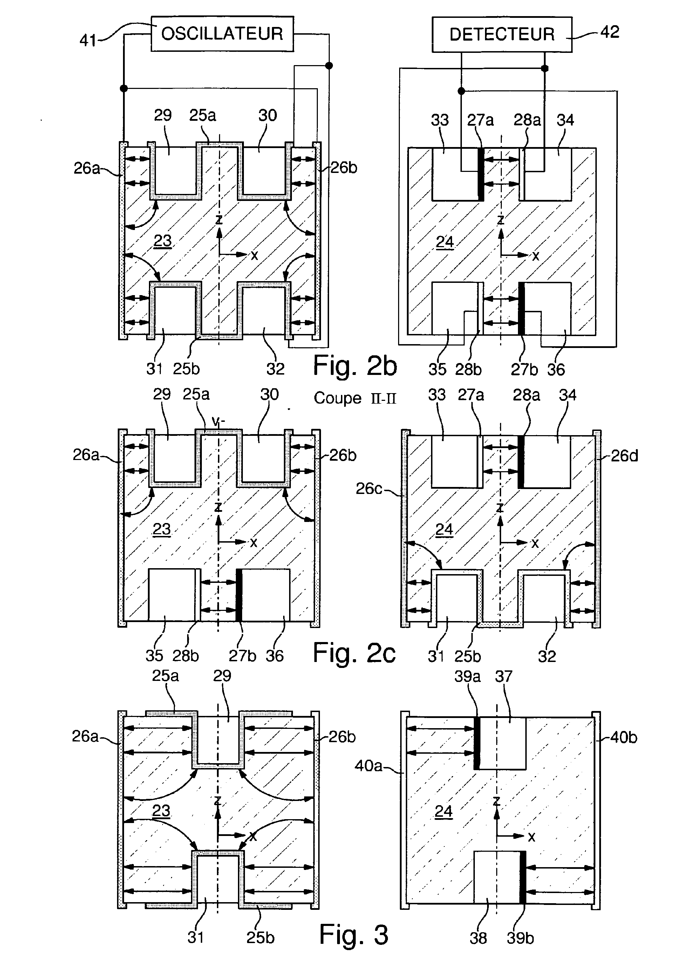

Conformément à un premier mode de réalisation préféré de l'invention représenté sur les figures 2a et 2b, le dispositif de mesure d'une vitesse angulaire comprend un transducteur formé par un unique diapason 21 piézoélectrique, classiquement en quartz, destiné à tourner à la vitesse angulaire, formé par une base 22 depuis laquelle s'étendent deux branches parallèles 23, 24 séparées par une fente, qui portent chacune des dépôts conducteurs formant des électrodes de polarités opposées qui permettent de créer et de détecter dans les branches un champ électrique alternatif provoquant et provoqué par la vibration du diapason par déformation piézo-électrique. Chaque branche 23, 24 présente deux faces principales supérieure et inférieure et deux faces latérales.

Des moyens d'excitation 25, 26 sont disposés sur une des deux branches, appelée branche d'excitation 23, pour générer en réponse à un signal d'excitation une vibration du transducteur à une fréquence déterminée, correspondant de préférence à la fréquence de résonance du diapason dans son plan X-Y, dans une première direction. Selon l'exemple représenté à la figure 2b, qui est une vue en coupe transversale selon l'axe II-II de la figure 2a, les moyens d'excitation comportent une première paire d'électrodes d'excitation 25a et 25b ou électrodes centrales agencées respectivement sur les faces supérieure et inférieure de la branche d'excitation et une deuxième paire d'électrodes d'excitation 26a et 26b , ou électrodes latérales agencées respectivement sur toute l'épaisseur de l'une et l'autre des deux faces latérales de la branche d'excitation.

Les électrodes sont prévues pour être connectées électriquement d'une manière en elle-même classique, les électrodes centrales 25a et 25b à l'un des pôles de la source d'excitation et les électrodes latérales 26a et 26b au pôle opposé de la source d'excitation; ces connexions peuvent être réalisées en grande partie par des pistes conductrices déposées sur le diapason lui-même. La source d'excitation a été représentée dans l'exemple de la figure 2a sous la forme d'un oscillateur 41. En fonctionnement, on peut ainsi entretenir les vibrations du résonateur par flexion de la branche d'excitation 23 du diapason, grâce à un champ électrique alternatif transversal dans les plans des branches 23, 24.

Selon une variante préférée, la branche d'excitation 23 présente deux rainures 29-30, 31-32 creusées longitudinalement sur chacune des faces supérieure et inférieure de la branche d'excitation, les rainures ayant une profondeur comprise entre 20% et 45% de l'épaisseur de la branche d'excitation, et préférentiellement de l'ordre de 30%.

Les électrodes centrales 25a, respectivement 25b, sont agencées de manière à recouvrir transversalement les rainures 29-30, respectivement 31-32 gravées sur la face correspondante.

Cette disposition des électrodes centrales dans des rainures gravées dans l'épaisseur des branches augmente le couplage piézo-électrique. A dimensions égales, cette augmentation entraîne une diminution de la résistance équivalente du diapason, et donc une diminution de la consommation de l'oscillateur qui lui est associé, car à facteur de qualité égal, cette disposition permet de réduire les dimensions du résonateur.

La prévision de rainures sur les deux faces donne une section de branche symétrique, ce qui évite des déformations de ces branches en dehors de leur plan. La présence des rainures favorise la création d'un champ électrique homogène selon l'axe électrique X du cristal.

Toutefois, il est envisageable de ne prévoir qu'une rainure sur chacune des faces supérieure et inférieure de la branche d'excitation, les électrodes centrales recouvrant transversalement dans ce cas l'unique rainure présente sur la face correspondante. Enfin, il est également envisageable de ne pas prévoir de rainure sur la branche d'excitation.

En se référant de nouveau aux figures 2a et 2b, des moyens de détection 27, 28 sont prévus sur l'autre branche du diapason, appelée branche de détection 24, pour produire un signal électrique de détection en réponse à une seconde vibration du transducteur, due à la première vibration et à la rotation autour de l'axe longitudinal 10, ayant la même fréquence déterminée et dans une deuxième direction perpendiculaire à la première direction. La deuxième vibration comprend une composante utile ayant une amplitude représentative de la vitesse angulaire.

Le gyromètre comprenant le diapason décrit précédemment comprend en outre un appareil de mesure adéquat, représenté sous la forme d'un détecteur 42, qui ne sera pas décrit ici car sa constitution dépend du but dans lequel la vitesse angulaire du transducteur est mesurée, cet appareil de mesure permettant de fournir à partir du signal électrique de détection un signal de mesure représentatif de la vitesse angulaire.

La branche de détection 24 comprend deux rainures 33-34, 35-36 creusées longitudinalement sur chacune des faces supérieure et inférieure, chacune des rainures présentant deux flancs latéraux. Les moyens de détection comprennent des première 27a et deuxième 28a électrodes de détection agencées en regard l'une de l'autre, sur la face supérieure, la première électrode 27a étant agencée sur un des flancs latéraux de la rainure 33 et la deuxième électrode 28a étant agencée sur un des flancs latéraux de la rainure 34, de sorte que le chemin électrique entre les deux électrodes 27a et 28a soit sensiblement rectiligne au travers de la branche de détection 24. Les moyens de détection comprennent également des troisième 27b et quatrième 28b électrodes de détection agencées en regard l'une de l'autre, sur la face inférieure, la troisième électrode 27b étant agencée sur un des flancs latéraux de la rainure 35 et la quatrième électrode 28b étant agencée sur un des flancs latéraux de la rainure 36, de sorte que le chemin électrique entre les deux électrodes 27b et 28b soit sensiblement rectiligne au travers de la branche de détection 24. Les électrodes 27a et 27b sont connectées à un premier pôle du détecteur 42 et les électrodes 28a et 28b sont connectées à un deuxième pôle du détecteur 42 opposé au premier pôle. Ainsi, la détection du champ électrique produit dans la branche de détection est optimisée tout en assurant un procédé simple de dépôt des électrodes similaires à celui décrit dans le document EP 0 750 177.

A titre d'exemple, les rainures creusées longitudinalement sur chacune des faces supérieure et inférieure de la branche de détection ont une profondeur comprise entre 20% et 45% de l'épaisseur de la branche de détection, et de préférence de l'ordre de 30%.

Toujours dans un souci de miniaturisation, il est avantageusement prévu des moyens de découpage mécanique 37 entre la partie de fixation 38 de la base du diapason au gyromètre et les branches vibrantes 23, 24. Ces moyens de découplage mécanique peuvent être suivant une première variante constitués par des encoches 37 pratiquées dans la partie supérieure de la base. Selon une deuxième variante, non représentée ici, ces moyens de découplage mécanique sont constitués par un trou agencé dans la partie centrale supérieure de la base 22. Une combinaison des variantes susmentionnées est également envisageable.

On notera que sur les figures 2c et 3 dont la description va suivre, l'oscillateur 41 et le détecteur 42 n'ont pas été représentés de nouveau dans un souci de simplification.

La figure 2c représente une variante de réalisation du diapason décrit en rapport avec les figures 2a et 2b. Cette variante est basée sur ce que l'on appelle un diapason à électrodes croisées. En effet, la différence avec le premier mode de réalisation exposé précédemment concerne l'interversion entre une paire d'électrodes d'excitation avec une paire d'électrodes de détection. On comprendra donc qu'un tel diapason avec électrodes croisées fonctionne de la même manière que le mode de réalisation présenté précédemment et présente donc les mêmes avantages.

Ainsi selon cette variante particulière, la première branche 23 comprend une première électrode d'excitation 25a agencée, par exemple, sur la face supérieure, de manière à recouvrir transversalement les rainures 29-30 et des deuxième 26a, respectivement troisième 26b électrodes d'excitation, reliées à un potentiel opposé à celui auquel est relié la première électrode, agencées sur toute l'épaisseur de l'une des faces latérales, respectivement sur toute l'épaisseur de l'autre face latérale de la branche 23. Cette même branche 23 comprend sur sa face inférieure des première 27b et deuxième 28b électrodes de détection agencées en regard l'une de l'autre, la première électrode 27b étant agencée sur un des flancs latéraux de la rainure 35 et la deuxième électrode 28b étant agencée sur un des flancs latéraux de la rainure 36, de sorte que le chemin électrique entre les deux électrodes 27b et 28b soit sensiblement rectiligne au travers de la branche 23.

L'autre branche 24 comprend de la même manière sur sa face supérieure, des troisième 27a et quatrième 28a électrodes de détection agencées en regard l'une de l'autre, la troisième électrode 27a étant agencée sur un des flancs latéraux de la rainure 33 et la quatrième électrode 28a étant agencée sur un des flancs latéraux de la rainure 34, de sorte que le chemin électrique entre les deux électrodes 27a et 28a soit sensiblement rectiligne au travers de la branche 24. La branche 24 comprend en outre, sur sa face inférieure, une quatrième électrode d'excitation 25b agencée de manière à recouvrir transversalement les rainures 31-32 et des cinquième 26c, respectivement sixième 26d, électrodes d'excitation agencées sur toute l'épaisseur d'une des faces latérales, respectivement sur toute l'épaisseur de l'autre face latérale, de la branche 24.

La figure 3 représente un diapason pour gyromètre selon un deuxième mode de réalisation de l'invention. Selon ce mode de réalisation, la branche de détection 24 ne comprend qu'une seule rainure 37, 38 sur chacune des faces supérieure et inférieure. Il est prévu qu'une première électrode de détection 39a est disposée sur un des flancs latéraux de la rainure 37 gravée sur la face supérieure de la branche de détection et une deuxième électrode de détection 40a est agencée sur toute l'épaisseur d'une des faces latérales de la branche de détection de sorte que le champ électrique entre les deux électrodes de détection 39a et 40a soit sensiblement rectiligne au travers de la branche de détection 24.

La branche de détection comprend en outre une troisième électrode de détection 39b disposée sur un des flancs latéraux de la rainure 38 gravée sur la face inférieure de la branche et une quatrième électrode de détection 40b est agencée sur toute l'épaisseur de la deuxième face latérale de la branche de détection opposée à la face latérale sur laquelle est agencée la deuxième électrode 40a, de sorte que le champ électrique entre les deux électrodes de détection 39b et 40b soit sensiblement rectiligne au travers de la branche de détection 24.

On notera qu'avantageusement, comme cela a été représenté sur les figures 2b, 2c et 3, le diapason piézoélectrique est un quartz dont les faces principales, supérieure et inférieure, sont sensiblement perpendiculaires à l'axe optique (z) du quartz et en ce que les branches s'étendent sensiblement selon l'axe mécanique (y) du quartz.

On comprendra que diverses modifications et / ou améliorations évidentes pour l'homme du métier peuvent être apportées aux différentes modes de réalisation de l'invention décrits dans la présente description, notamment on notera que les branches de détection et d'excitation peuvent être interverties, la branche d'excitation servant alors de branche de détection et vice versa, que les moyens de découplage mécanique peuvent être utilisés pour chacun des modes de réalisation sus-présentés, que les solutions dites diapason à électrodes croisées, dans lesquelles des paires d'électrodes d'excitation et de détection sont inversées entre les deux branches, sont possibles, et cela sans sortir du cadre de l'invention défini par les revendications annexées.

## Revendications

1. Transducteur de mesure d'une vitesse angulaire formé par:
- un unique diapason piézoélectrique (21) destiné à tourner à ladite vitesse angulaire ;
- ledit diapason comprenant des première (23) et seconde (24) branches vibrantes s'étendant depuis une base (22), chaque branche présentant deux faces principales supérieure et inférieure et deux faces latérales ;
- des moyens d'excitation (25a, 25b, 26a, 26b) d'une première vibration du diapason, disposés sur un des deux branches, appelée branche d'excitation (23) ;
- des moyens de détection (27a, 27b, 28a, 28b ; 39a, 39b, 40a, 40b) d'une deuxième vibration du diapason produite en réponse à la première vibration et à une rotation du diapason, disposés sur l'autre des deux branches, appelée branche de détection (24) ;
**caractérisé en ce que** ladite branche de détection comprend au moins une première rainure (33, 34 ; 37) sur ladite face supérieure et au moins une deuxième rainure (35, 36 ; 38) sur ladite face inférieure, lesdites première et deuxième rainures présentant chacune des flancs latéraux, et
**en ce que** lesdits moyens de détection comprennent des première et deuxième électrodes de détection (27a, 28a ; 39a, 40a) disposées en regard l'une à l'autre, la première électrode de détection (27a ; 39a) étant agencée sur un des flancs latéraux de ladite première rainure (33 ; 37), la deuxième électrode de détection (28a ; 40a) étant agencée de sorte que le champ électrique entre les première et deuxième électrodes de détection soit sensiblement rectiligne au travers de la branche de détection, et des troisième et quatrième électrodes de détection (27b, 28b ; 39b, 40b) disposées en regard l'une à l'autre, la troisième électrode de détection (27b ; 39b) étant agencée sur un des flancs latéraux de ladite deuxième rainure (36 ; 38), la quatrième électrode de détection (28b ; 40b) étant agencée de sorte que le champ électrique entre les troisième et quatrième électrodes de détection soit sensiblement rectiligne au travers de la branche de détection.

2. Transducteur de mesure d'une vitesse angulaire selon la revendication 1, **caractérisé en ce que** ladite branche de détection comprend une troisième rainure (34) sur ladite face supérieure et une quatrième rainure (36) sur ladite face inférieure, lesdites troisième et quatrième rainure présentant chacune deux flancs latéraux,
**en ce que** ladite première (27a), respectivement deuxième (28a), électrode de détection est agencée sur un des flancs latéraux de la première (33), respectivement troisième (34), rainure de sorte que le champ électrique entre les première et deuxième électrodes de détection soit sensiblement rectiligne au travers de la branche de détection et
**en ce que** ladite troisième (27b), respectivement quatrième (28b), électrode de détection est agencée sur un des flancs latéraux de la deuxième (36), respectivement quatrième (35), rainure de sorte que le champ électrique soit sensiblement rectiligne entre les troisième et quatrième électrodes de détection au travers de la branche de détection.

3. Transducteur de mesure d'une vitesse angulaire selon la revendication 2, dans lequel les moyens d'excitation comprennent des première (25a), deuxième (26a), troisième (25b) et quatrième (26b) électrodes d'excitation disposées respectivement sur les faces supérieure, inférieure et latérales de la branche d'excitation (23), **caractérisé en ce que** ladite branche d'excitation présentent au moins une première rainure (29) sur la face supérieure, respectivement, une deuxième rainure (31) sur la face inférieure de ladite branche d'excitation, et **en ce que** ladite première électrode d'excitation (25a) est disposée de manière à recouvrir transversalement la première rainure, et ladite troisième électrode d'excitation (25b) est disposée de manière à recouvrir transversalement la deuxième rainure.

4. Transducteur de mesure d'une vitesse angulaire selon la revendication 2 ou 3, **caractérisé en ce que** le diapason est un diapason avec électrodes croisées.

5. Transducteur de mesure d'une vitesse angulaire selon la revendication 1, **caractérisé en ce que** la deuxième électrode de détection (40a) est agencée sur toute l'épaisseur d'une première face latérale de la branche de détection (24) de sorte que le champ électrique entre les première et deuxième électrodes de détection soit sensiblement rectiligne au travers de la branche de détection, et
**en ce que** la quatrième électrode de détection (40b) est agencée sur toute l'épaisseur de la deuxième face latérale de la branche de détection opposée à la première face latérale, de sorte que le champ électrique entre les troisième et quatrième électrodes de détection soit sensiblement rectiligne au travers de la branche de détection.

6. Transducteur de mesure d'une vitesse angulaire selon l'une des revendications précédentes, **caractérisé en ce que** le diapason piézoélectrique est un quartz dont les faces principales, supérieure et inférieure, sont sensiblement perpendiculaires à l'axe optique (z) du quartz et **en ce que** les branches s'étendent sensiblement selon l'axe mécanique (y) du quartz.

7. Transducteur de mesure d'une vitesse angulaire selon l'une des revendications précédentes, **caractérisé en ce que** la base (22) est pourvue de moyens de découplage mécanique (37) entre la partie de fixation de la base et les branches (23, 24) du diapason.

## Claims

1. Transducer for measuring an angular velocity formed by:
- a single piezoelectric tuning fork (21) that rotates at said angular velocity,
- said tuning fork including first (23) and second (24) vibrating legs extending from a base (22), each leg having two main top and bottom faces and two lateral faces,
- means (25a, 25b, 26a, 26b) for exciting a first vibration of the tuning fork, arranged on one of the two legs, called the excitation leg (23),
- means (27a, 27b, 28a, 28b; 39a, 39b, 40a, 40b) for detecting a second vibration of the tuning fork generated in response to said first vibration and to a rotation of the tuning fork, arranged on the other of the two legs, called the detection leg (24),
**characterized in that** said detection leg includes at least one first groove (33, 34; 37) on said top face and at least one second groove (35, 36; 38) on said bottom face, said first and second grooves each having lateral flanks, and
**in that** said detection means include first and second detection electrodes (27a, 28a; 39a, 40a) arranged facing each other, the first detection electrode (27a; 39a) being arranged on one of the lateral flanks of said first groove (33; 37), the second detection electrode (28a; 40a) being arranged such that the electrical field between the first and second detection electrodes is substantially rectilinear through the detection leg, and third and fourth detection electrodes (27b, 28b; 39b, 40b) arranged facing each other, the third detection electrode (27b, 39b) being arranged on one of the lateral flanks of said second groove (36; 38), the fourth detection electrode (28b; 40b) being arranged such that the electrical field between the third and fourth detection electrodes is substantially rectilinear through the detection leg.

2. Transducer for measuring an angular velocity according to claim 1, **characterized in that** said detection leg includes a third groove (34) on said top face and a fourth groove (36) on said bottom face, said third and fourth grooves each having two lateral flanks,
**in that** said first (27a), respectively second (28a) detection electrode is arranged on one of the lateral flanks of the first (33), respectively third (34) groove , such that the electrical field between the first and second detection electrodes is substantially rectilinear through the detection leg, and
**in that** said third (27b), respectively fourth (28b) detection electrode is arranged on one of the lateral flanks of the second (36) respectively fourth (35) groove such that the electrical field is substantially rectilinear between the third and fourth detection electrodes through the detection leg.

3. Transducer for measuring an angular velocity according to claim 2, wherein the excitation means include first (25a), second (26a), third (25b) and fourth (26b) excitation electrodes arranged respectively on the top, bottom and lateral faces of the excitation leg (23), **characterized in that** said excitation leg has at least one first groove (29) on the top face, respectively one second groove (31) on the bottom face of said excitation leg, and **in that** said first excitation electrode (25a) is arranged so as to cover transversely the first groove, and said third excitation electrode (25b) is arranged so as to cover transversely said second groove.

4. Transducer for measuring an angular velocity according to claim 2 or 3, **characterized in that** the tuning fork is a tuning fork with crossed electrodes.

5. Transducer for measuring an angular velocity according to claim 1, **characterized in that** the second detection electrode (40a) is arranged over the entire thickness of a first lateral face of the detection leg (24) such that the electrical field between the first and second detection electrodes is substantially rectilinear through the detection leg, and
**in that** the fourth detection electrode (40b) is arranged over the entire thickness of the second lateral face of the detection leg opposite the first lateral face, such that the electrical field between the third and fourth detection electrodes is substantially rectilinear through the detection leg.

6. Transducer for measuring an angular velocity according to any of the preceding claims, **characterized in that** the piezoelectric tuning fork is a quartz whose main top and bottom faces are substantially perpendicular to the optical axis (z) of the quartz and **in that** the legs extend substantially along the mechanical axis (y) of the quartz.

7. Transducer for measuring an angular velocity according to any of the preceding claims, **characterized in that** the base (22) is provided with mechanical uncoupling means (37) between the part for securing the base and the legs (23, 24) of the tuning fork.

## Patentansprüche

1. Winkelgeschwindigkeits-Messwandler, der gebildet ist aus:
- einer einzigen piezoelektrischen Stimmgabel (21), die dazu bestimmt ist, sich mit der Winkelgeschwindigkeit zu drehen;
- wobei die Stimmgabel einen ersten (23) und einen zweiten (24) schwingenden Schenkel umfasst, die sich von einer Basis (22) erstrecken, wobei jeder Schenkel eine obere Hauptfläche und eine untere Hauptfläche sowie zwei Seitenflächen aufweist;
- Mitteln (25a, 25b, 26a, 26b) zum Erregen einer ersten Schwingung der Stimmgabel, die an einem der beiden Schenkel, der Erregungsschenkel (23) genannt wird, angeordnet sind; und
- Mitteln (27a, 27b, 28a, 28b; 39a, 39b, 40a, 40b) zum Erfassen einer zweiten Schwingung der Stimmgabel, die in Reaktion auf die erste Schwingung und auf eine Drehung der Stimmgabel erzeugt wird, die an dem anderen der beiden Schenkel, der Erfassungsschenkel (24) genannt wird, angeordnet sind;
**dadurch gekennzeichnet, dass** der Erfassungsschenkel wenigstens eine erste Nut (33, 34; 37) in der oberen Fläche und wenigstens eine zweite Nut (35, 36; 38) in der unteren Fläche aufweist, wobei die erste und die zweite Nut jeweils Seitenflächen besitzen, und
dass die Erfassungsmittel eine erste und eine zweite Erfassungselektrode (27a, 28a; 39a, 40a) umfassen, die einander gegenüber angeordnet sind, wobei die erste Erfassungselektrode (27a; 39a) an einer der Seitenflächen der ersten Nut (33; 37) angeordnet ist, die zweite Erfassungselektrode (28a; 40a) in der Weise angeordnet ist, dass das elektrische Feld zwischen der ersten und der zweiten Erfassungselektrode durch den Erfassungsschenkel im Wesentlichen geradlinig ist, sowie eine dritte und eine vierte Erfassungselektrode (27b, 28b; 39b, 40b) umfassen, die einander gegenüber angeordnet sind, wobei die dritte Erfassungselektrode (27b; 39b) an einer der Seitenflächen der zweiten Nut (36; 38) angeordnet ist und die vierte Erfassungselektrode (28b; 40b) in der Weise angeordnet ist, dass das elektrische Feld zwischen der dritten und der vierten Erfassungselektrode durch den Erfassungsschenkel im Wesentlichen geradlinig ist.

2. Winkelgeschwindigkeits-Messwandler nach Anspruch 1, **dadurch gekennzeichnet, dass** der Erfassungsschenkel in der oberen Fläche eine dritte Nut (34) und in der unteren Fläche eine vierte Nut (36) aufweist, wobei die dritte und die vierte Nut jeweils zwei Seitenflächen besitzen,
dass die erste (27a) bzw. die zweite (28a) Erfassungselektrode auf einer der Seitenflächen der ersten (33) bzw. der dritten (34) Nut angeordnet ist, derart, dass das elektrische Feld zwischen der ersten und der zweiten Erfassungselektrode durch den Erfassungsschenkel im Wesentlichen geradlinig ist, und
dass die dritte (27b) bzw. die vierte (28b) Erfassungselektrode an einer der Seitenflächen der zweiten (36) bzw. vierten (35) Nut angeordnet ist, derart, dass das elektrische Feld zwischen der dritten und der vierten Erfassungselektrode durch den Erfassungsschenkel im Wesentlichen geradlinig ist.

3. Winkelgeschwindigkeits-Messwandler nach Anspruch 2, in dem die Erregungsmittel eine erste (25a), eine zweite (26a), eine dritte (25b) und eine vierte (26b) Erregungselektrode umfassen, die auf der oberen Fläche, bzw. der unteren Fläche bzw. den Seitenflächen des Erregungsschenkels (23) angeordnet sind, **dadurch gekennzeichnet, dass** der Erregungsschenkel wenigstens eine erste Nut (29) in der oberen Fläche bzw. eine zweite Nut (31) in der unteren Fläche des Erregungsschenkels aufweist und dass die erste Erregungselektrode (25a) in der Weise angeordnet ist, dass die erste Nut in Querrichtung abgedeckt ist, und die dritte Erregungselektrode (25b) in der Weise angeordnet ist, dass die zweite Nut in Querrichtung abgedeckt ist.

4. Winkelgeschwindigkeits-Messwandler nach Anspruch 2 oder 3, **dadurch gekennzeichnet, dass** die Stimmgabel eine Stimmgabel mit gekreuzten Elektroden ist.

5. Winkelgeschwindigkeits-Messwandler nach Anspruch 1, **dadurch gekennzeichnet, dass** die zweite Erfassungselektrode (40a) über die gesamte Dicke einer ersten Seitenfläche des Erfassungsschenkels (24) angeordnet ist, derart, dass das elektrische Feld zwischen der ersten und der zweiten Erfassungselektrode durch den Erfassungsschenkel im Wesentlichen geradlinig ist, und
dass die vierte Erfassungselektrode (40b) über die gesamte Dicke der zweiten Seitenfläche des Erfassungsschenkels gegenüber der ersten Seitenfläche angeordnet ist, derart, dass das elektrische Feld zwischen der dritten und der vierten Erfassungselektrode durch den Erfassungsschenkel im Wesentlichen geradlinig ist.

6. Winkelgeschwindigkeits-Messwandler nach einem der vorhergehenden Ansprüche, **dadurch gekennzeichnet, dass** die piezoelektrische Stimmgabel ein Quarz ist, dessen obere und dessen untere Hauptfläche zur optischen Achse (z) des Quarzes im Wesentlichen senkrecht sind, und dass sich die Schenkel im Wesentlichen längs der mechanischen Achse (y) des Quarzes erstrecken.

7. Winkelgeschwindigkeits-Messwandler nach einem der vorhergehenden Ansprüche, **dadurch gekennzeichnet, dass** die Basis (22) zwischen dem Befestigungsabschnitt der Basis und den Schenkeln (23, 24) der Stimmgabel mit mechanischen Entkopplungsmitteln (37) versehen ist.
